Europäisches Patentamt

**European Patent Office**

**Office européen des brevets**

(19)

(11) Publication number: **0 212 884**
**A2**

# EUROPEAN PATENT APPLICATION

(12)

(21) Application number: **86305883.0**

(22) Date of filing: **30.07.86**

(51) Int. Cl.⁴: **B 32 B 5/18**

(30) Priority: **30.07.85 JP 166818/85**

(43) Date of publication of application: **04.03.87**
**Bulletin 87/10**

(84) Designated Contracting States: **DE FR GB IT NL SE**

(71) Applicant: **THE DOW CHEMICAL COMPANY, 2030 Dow Center Abbott Road P.O. Box 1967, Midland, MI 48640 (US)**

(72) Inventor: **Matsue, Kenji, 22 Kobodai, Kanuma City Tochigi Prefecture 322 (JP)**
Inventor: **Shimpo, Kiji, 2287-12 Moro, Kanuma City Tochigi Prefecture 322 (JP)**

(74) Representative: **Burford, Anthony Frederick et al, W.H. Beck, Greener & Co. 7 Stone Buildings Lincoln's Inn, London WC2A 3SZ (GB)**

(54) **Partially flexibilized extruded plastic foam panel and method for making thereof.**

(57) An extruded plastic foam panel has at least two dissimilar layers, each layer possessing a closed cell structure. One layer is relatively rigid, and there is at least one surface layer which is relatively compressible and flexible and having wrinkles in its side walls, which walls extend in the thickness direction. The rigid layer is integral with the compressible layer(s). The panel can be prepared by passing at least one feedstock foam panel through a pair of rolls separated by a distance that is less than the total panel thickness.

0212884

## PARTIALLY FLEXIBILIZED EXTRUDED PLASTIC FOAM
## PANEL AND METHOD FOR MAKING THEREOF

This invention relates generally to an extruded plastic foam panel (hereinafter referred to as "a foam panel") possessing a closed cell structure. More particularly, it relates to a modified foam panel which is suitable for mounting on wall surface and floor surface of buildings and wall surfaces of various tanks, etc., as a heat insulator, protector or shock absorber. The modified panel has at least two layers. One layer is relatively rigid, and there is at least one surface layer which is relatively compressible and flexible. The rigid layer is integral with the compressible layer(s).

Hitherto, a relatively rigid plastic foam panel possessing a closed cell structure has been fastened to an open cell polyurethane flexible foam sheet for applications such as mounting on irregular surfaces.

Furthermore, a foam panel with bending property is also known, which is obtained by subjecting pressure in either or both directions of longitudinal

0212884

and lateral directions of the foam panel to form wrinkles in its all cell walls extending in the pressurized direction in order to make its mounting on curved surfaces easy (GB 2,098,818 A). The longitudinal direction referred to in that invention means the extruded direction of the foam panel; and the lateral direction means a direction that is at a right angle with respect to the longitudinal direction, and lies particularly within the plane of the panel.

However, both types of aforementioned prior art are unsatisfactory in several respects, as discussed below.

In the case of joining sheets of a flexible foam and a rigid foam, various additional and costly steps are necessary. They include coating of adhesive, joining, and drying procedures. Moreover, even if irregularity absorbing ability is given by fastening the flexible foam sheet., the foam panel is still rigid and poor in flexibility, so that it is still difficult to mount the sheet on a curved surface. In addition, flexible foam (such as urethane foam) generally possesses a continuous open cell structure and has high water absorption property. Therefore, a foam panel prepared by joining the flexible foam sheet is rarely used as an insulator or mounted on the surface of a corrosive material such as iron. It thus has limited end uses.

On the other hand, the foam panel with wrinkles formed on all cell walls extending in the longitudinal and lateral directions of the foam panel
has flexibility in the longitudinal and lateral directions, but also has a problem since wrinkles are hardly
formed in the cell walls extending in the direction of
thickness. This results in the compressive deformation property being poor in the direction of thickness and poor irregularity absorbing ability. When
wrinkles are formed in all cell walls extending in
the direction of thickness in order to obtain its
compressive deforming property in the direction of
thickness, the foam panel has its core greatly weakened. As a result, it becomes floppy and difficult to
handle and install. Thus, its use is also limited.

Means for solving the above problems of
the prior art have now been discovered.

A first embodiment of the invention is
an extruded plastic foam panel having a closed cell
structure characterized in that the panel has at
least one flexible layer having wrinkles in its cell
walls, which walls extend in a thickness direction
formed on a surface of a rigid layer, and the rigid
layer has substantially no wrinkles in its cell
walls, with the cell walls of the flexible layer and
the rigid layer being continuous.

A second embodiment of the invention is
a method of making a two-layered extruded plastic
foam panel with one flexible layer and one rigid
layer characterized by the steps of joining two
extruded plastic foam panels and passing the joined panels at least once through rolls arranged with a distance less than the total thickness of the joined panels.

A third embodiment of the invention is a method of making a three-layered extruded plastic foam panel having two flexible surface layers and a rigid core layer comprising the step of passing a single extruded plastic foam panel possessing a closed cell structure through rolls arranged with a distance less than the thickness of the single extruded plastic foam panel.

Figure 1 and Figure 2 are views showing examples of modified foam panels according to this invention.

Figure 3 and Figure 4 are explanatory views showing methods of making foam panels according to this invention.

Figures 5-7 are electron microphotographs showing the cell structures of foam panels according to this invention.

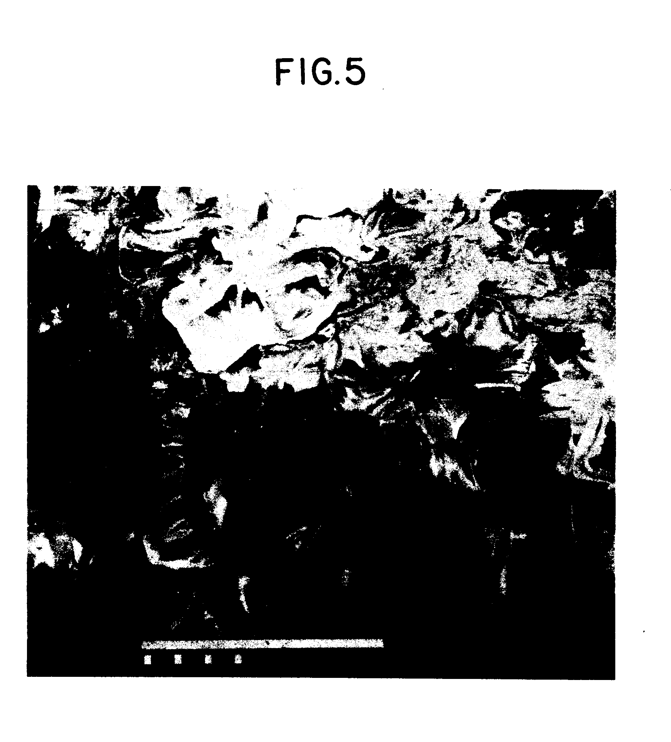

Figure 5 is a photograph showing the boundary portion between the flexible layer and the rigid layer at a section taken in the transverse direction.

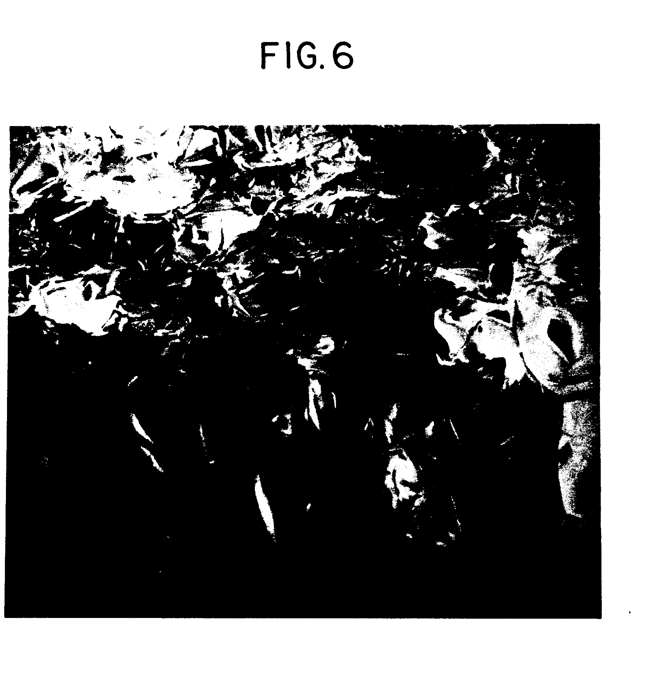

Figure 6 is a photograph showing the boundary portion between the flexible layer and the rigid layer and a section taken in the longitudinal direction.

0212884

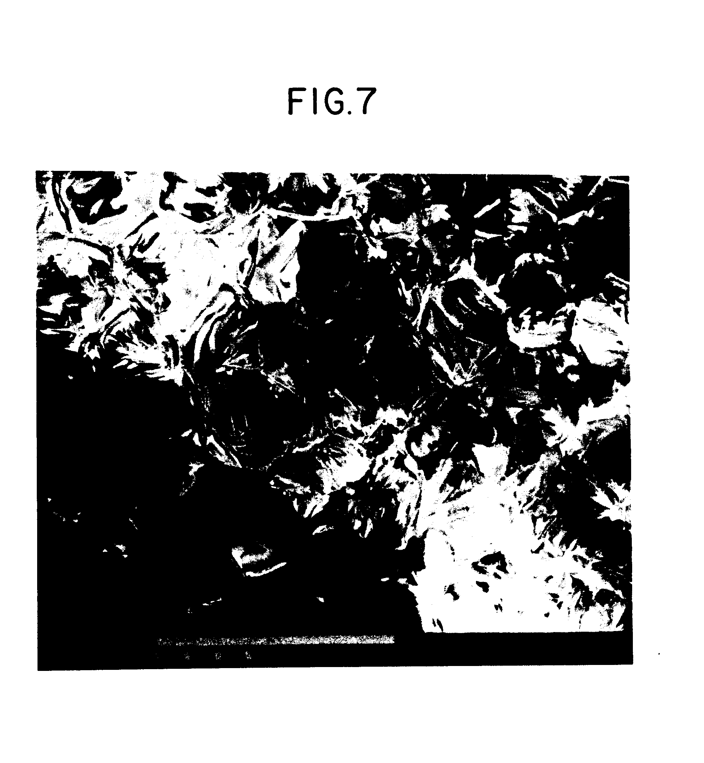

Figure 7 is a photograph showing a sectional view of the flexible layer taken in the plane direction.

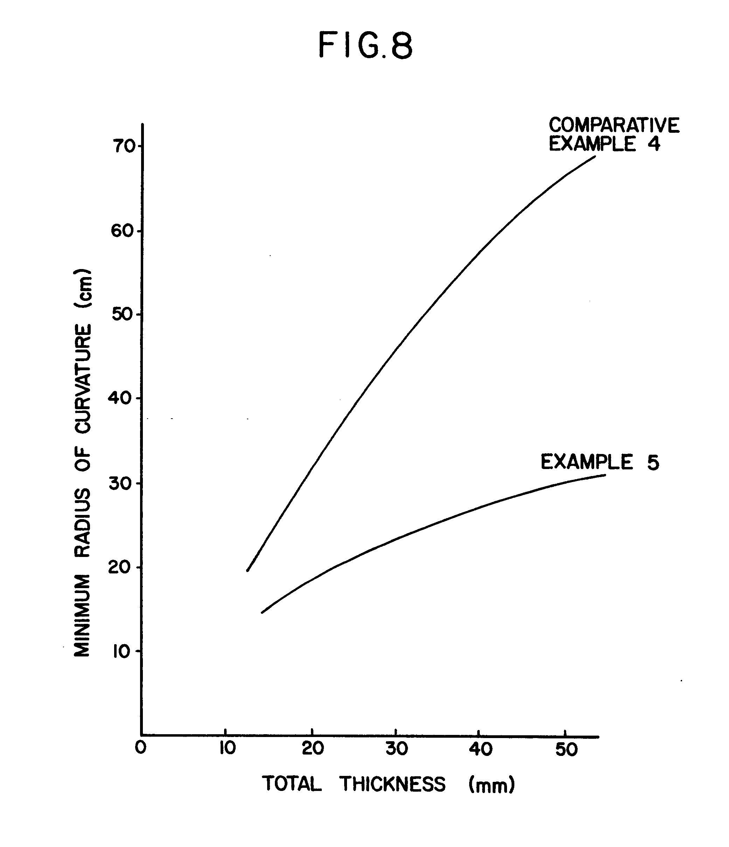

Figure 8 is a graph showing the results of Example 5 and Comparative Example 4.

The first to third embodiments are furthermore illustrated in detail below.

As a component material of the foam panel according to the first embodiment, employed are polymers of styrene, vinyl chloride, vinylidene chloride, methyl methacrylate and nylon, or copolymers containing them as their main components; or a mixture of the above polymers or copolymers as the main component.

Preferred resins are polymers prepared from styrene type monomers such as styrene, α-methylstyrene, vinyl toluene, and chlorostyrene, or copolymers containing them as their main components, most preferably polystyrene. As monomers to be copolymerized with the styrene type monomer, it is preferable to use, for example, acrylonitrile, methacrylonitrile, methyl acrylate, methyl methacrylate, maleic anhydride, acryl amide, vinyl pyridine, acrylic acid, and methacrylic acid. The other resins may be used in admixture with the above-mentioned polymers or copolymers, in an amount not to impair their properties.

The foam panel comprising the above-mentioned materials consists of a rigid layer 2 and at least one

0212884

flexible layer 1 which is formed on either or both sur-
faces of the rigid layer 2. It is necessary that both
the rigid layer 2 and the flexible layer 1 possess
closed cell structures. The reason for it is that the
use is very restricted if the flexible layer is water-
-absorbing. The flexible layer 1 must have at least
independency between cells to an extent that its front
and back surfaces cannot be connected via open cells,
but it is not necessarily fully independent.

The flexible layer 1 has wrinkles in its cell
walls that extend mainly in the direction of thickness.
Also, it may have some wrinkles in the cell walls
extending in the other directions. The rigid layer 2
is a layer possessing essentially the same or similar
cell structure to that of a feedstock foam panel produced by a general extrusion foaming procedure.

Wrinkles formed in the cell walls of the
flexible layer 1 are clearly visible under an electronic microscope, as shown in Figures 5-7. Since
such wrinkles are formed in the cell walls extending in
the direction of thickness, the flexible layer 1 has a
lower initial compressive elastic modulus than the
rigid layer 2; and has improved flexibility, so that
bending property of the foam panel is improved due to
the presence of the flexible layer 1.

The flexible layer 1 desirably has a compressive elastic modulus of 10-50 $kg/cm^2$ (kilograms/centi-
meters squared), preferably 15 to 40 $kg/cm^2$. If the
compressive elastic modulus is too low, the stability
of the foam panel mounted on a wall surface, etc. is

34,306                    -6-

poor; and if the compressive elastic modulus is too high, the irregularity absorbing ability and bending property are not easily obtained. Furthermore, the rigid layer 2 has desirably a compressive elastic modulus of 50 to 150 kg/cm², preferably 70 to 130 kg/cm². If the compressive elastic modulus is too low, the whole foam panel becomes too flexible to be handled easily, and its use is limited. Conversely, if it is to high, good bending property is not obtained.

The total thickness of the foam panel according to the first embodiment of the invention is 10 to 100 mm (millimeters), preferably 20 to 50 mm. The thickness of the flexible layer 1 is decreased corresponding to the total thickness. However, if the total thickness is too small, the significance of forming the flexible layer 1 is lost. Additionally, where the total thickness is too large, the panel's bending property is not sufficient even if the flexible layer 1 is formed.

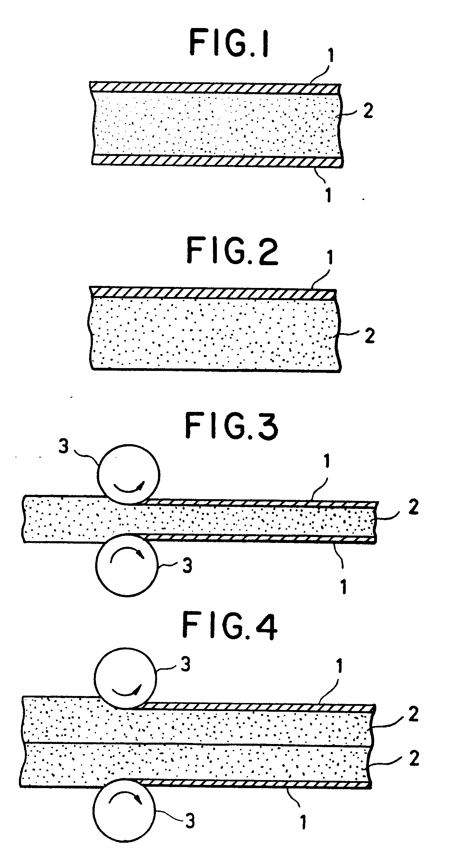

The mathematical relationship between the thickness (t) of the flexible layer 1 of the foam panel shown in Figure 2 and the thickness (T) of the rigid layer 2 is desirably $(t/(t+T)) \times 100 = 5 \sim 50$ (%). Furthermore, when the thickness of one of the upper and lower flexible layers 1 and 1 is expressed by $t_1$, the thickness of the other flexible layer is expressed by $t_2$, and the thickness of the rigid layer is expressed by T, it is desirable that $t_1 \leqq T$, $t_2 \leqq T$, and $((t_1+t_2)/(t_1+t_2+T)) \times 100 = 5 \sim 85$ (%). If the flexible layer 1 is too thick as compared with the rigid layer 2, the panel's core strength as a whole is lost, and if the flexible layer is too thin, the panel is generally difficult to bend.

The flexible layer 1 of the foam panel according to the first embodiment desirably has cell diameter of 0.1 to 1.5 mm, preferably 0.2 to 1.0 mm, in the direction of thickness, and an average density of 30 to 80 kg/m$^3$ (kilogram/meter cubed), in order to have suitable flexibility. The rigid layer desirably has a cell diameter of 0.2 to 2.0 mm, preferably 0.4 to 1.0 mm, and an average density of 25 to 40 kg/cubic meter, in order to be useful for various applications.

Next, the second and third embodiments are illustrated as follows.

In the second embodiment, a foam panel possessing a closed cell structure produced by a general extrusion foaming procedure is passed through rolls 3 and 3. The foam panel may be supplied through the rolls 3 and 3 after completion of an aging step in the extrusion foaming process. However, it is preferably supplied through the rolls 3 and 3 prior to completion of an aging step because buckling of the rigid layer can be more easily prevented and the cell breakage of the flexible layer 1 to be formed is reduced to the minimum.

The product prepared according to the second embodiment is the foam panel shown in Figure 1, and the space between the rolls 3 and 3 is determined to approximately correspond to the thickness of the rigid layer 2

34,306

of the foam panel shown in Figure 1. Also, the product prepared in the third embodiment is the foam panel shown in Figure 2, and the space between the rolls 3 and 3 may be determined to approximately correspond to twice the thickness of the rigid layer 2 of the foam panel to be prepared shown in Figure 2.

The desired foam panel may be prepared by a single pass through the rolls 3 and 3 with the above--mentioned space therebetween, but it is preferable to prepare the desired foam panel by passing through the rolls 3 and 3 several times with the space of the rolls 3 and 3 determined stepwise. In such a manner, wrinkles to be formed are increased and the flexible layer 1 becomes superior in elasticity, and total bending property is also improved.

By passing the foam panel through the rolls 3 and 3, the surface portions of the foam panel contacted with the rolls 3 and 3 are crushed down, and wrinkles are formed in its cell walls extending in the direction of thickness, thereby forming the flexible layers 1. At that time, it is necessary to determine the space between the rolls 3 and 3 in such a manner that the above crushing is effected only to the surface portions in order not to affect the rigid layer 2, as described in the description of the first embodiment. Thus, the substantially uncrushed portion remains as the rigid layer 2.

Although the rolls 3 and 3 may be at ambient temperature, it is preferable to heat them corresponding to the materials for the foam panel to be supplied and soften the surface of the foam panel at a temperature below the melting temperature. By carrying out such heating, wrinkles are formed more effectively in its cell walls, and simultaneously possible cracks in the cell walls are prevented.        This heating temperature is suitably 50 to 120°C (Centigrade) for a foam panel of, for example, polystyrene.

The rolls 3 and 3 are preferred to have a smooth surface and be made from stainless steel, chromium plated steel, rigid rubber (hardness of at least about 80°C according to the standards of the Japanese Rubber Institute or above), rigid resin, etc. from the view point that the uniform flexible layer 1 is formed. The diameters of rolls 3 and 3 are desirably 50 to 300 mm, preferably 80 to 200 mm.

The rolls 3 and 3 should rotate at a peripheral speed of about 2 to 5 m/min. (meters/minute) from the view point of preventing the cell walls from breakage and maintaining good production efficiency.

Since the surface layer 1 of the foam panel, according to the first embodiment becomes suitably flexible due to the wrinkles formed in the cell walls, irregularities of an object's surface can be absorbed easily by deformation of the flexible layer 1. Furthermore, since the flexible layer 1 has softness, cushioning properties, and superior stress dispersing property, the foam panel is durable against shock and concentrated load due to the presence of the flexible layer 1.

On the other hand, when the foam panel is bent in the direction opposite the flexible layer 1 side, wrinkles of the flexible layer 1 are smoothed out to allow easy bending. Particularly, the flexible layer 1 of the foam panel possesses wrinkles in its cell walls extending in the direction of thickness, and there is no plane directionality in the cell walls extending in the direction of thickness. Consequently, approximately equal bending properties may be obtained about any axis that is parallel to the upper surface of the flexible layer. Therefore, mounting on spherical surfaces can be carried out easily.

Also, in the second and third embodiments, by passing the foam panel possessing a closed cell structure formed by a general extrusion foaming procedure through the rolls 3 and 3, the surface portions contacted with the rolls 3 and 3 are crushed down by linear load due to the rolls 3 and 3. Thus, wrinkles are produced by this crushing down, in its cell walls extending in the direction of thickness to form the flexible layers 1 and simultaneously the uncrushed portion remains as the rigid layer 2.

The invention will be disclosed with references to the following Examples and Comparative Examples.

Example 1

Two polystyrene foam panels (made by DOW KAKOH K.K.; Trade name STYROFOAM IB) each having a thickness of 25.2 mm and a density of 29.4 kg/m$^3$ were obtained. One of the panels was placed on top of the other panel, and the pair of adjacent panels were then passed through rolls once. The diameter of the rolls was 200 mm, the space between rolls was 41 mm, roll force was 20 kg/cm, the temperature of the rolls was 100°C, and the surface speed of the rolls was 5 m/min. The properties of the foam panel obtained are shown in Table 1. Also, the cell structure of the foam panel obtained is shown in Figure 1 to Figure 7. The total length of white line at the bottom end of the photograph in Figure 5 to Figure 7 is 1 mm.

Comparative Example 1

The feedstock polystyrene foam panels as used in Example 1 were tested for properties without passing them through the rolls. The results obtained are also shown in Table 1.

Table 1

| Example | Run No. | Thickness (mm) | Compressive properties | | Bending properties | | | Notes |
| | | | 5% compressive strength (kg/cm$^2$) | Compressive elastic modulus (kg/cm$^2$) | Bending strength (kg/cm$^2$) | Bending elastic modulus (kg/cm$^2$) | Radius of curvature * (cm) | |
| --- | --- | --- | --- | --- | --- | --- | --- | --- |
| Example 1 | 1 | 22.9 | 1.5 | 34 | 3.5 | 81 | 27 | ** |
| | 2 | 22.2 | 1.7 | 36 | 4.0 | 107 | 29 | *** |
| Comparative Example 1 | 3 | 25.2 | 3.3 | 85 | 3.8 | 111 | 37 | - |
| | 4 | 23.0 | 3.3 | 80 | 3.2 | 86 | 31 | - |
| | 5 | 22.2 | 3.3 | 86 | 3.1 | 83 | 30 | - |
| | 6 | 24.3 | 3.4 | 86 | 3.2 | 83 | 32 | - |
| | 7 | 21.2 | 3.2 | 91 | 3.2 | 87 | 28 | - |
| | 8 | 20.3 | 3.1 | 77 | 3.1 | 85 | 28 | - |

\* Radius of curvature $\rho$ is calculated according to the following equation:

$(1/p) = M/(E-I)$  M: bending moment

E: elastic modulus

I: sectional two-dimensional moment

\*\* Upper one of two panels.

\*\*\* Bottom one of two panels.

0212884

## Example 2

The same polystyrene foam panel as used in Example 1 was singly passed through the rolls once. The diameter, roll pressure and rotation speed of rolls were same as in Example 1, except that the space and temperature of the rolls were varied. The properties of the foam panel obtained are shown in Table 2.

34,306

## Table 2

| Example | Run No. | Conditions | | | Compressive properties | | Bending properties | | |
|---------|---------|------------|------------|------------|-----------------------|---------------------|---------------------|--------------------|--------------------|
| | | Roll temp. (°C) | Roll space (mm) | Thick-ness (mm) | 5% Compressive strength (kg/cm²) | Compressive elastic modulus (kg/cm²) | Bending strength (kg/cm²) | Bending modulus (kg/cm²) | Radius of curvature * (cm) |
| 2 | 9 | 50 | 20.7 | 20.8 | 1.5 | 32 | 3.9 | 92 | 24 |
| | 10 | 80 | 20.7 | 21.2 | 1.3 | 29 | 4.2 | 111 | 24 |
| | 11 | 100 | 20.7 | 21.4 | 1.4 | 32 | 4.6 | 112 | 26 |
| | 12 | 120 | 20.7 | 22.2 | 1.4 | 37 | 3.7 | 94 | 28 |
| | 13 | 150 | 20.7 | 21.8 | 1.5 | 36 | 4.5 | 137 | 33 |
| | 14 | 100 | 15.5 | 17.4 | 0.9 | 18 | 4.4 | 113 | 22 |
| | 15 | 100 | 18.4 | 20.4 | 1.0 | 22 | 3.8 | 82 | 22 |
| | 16 | 100 | 23.6 | 23.4 | 2.4 | 51 | 3.9 | 101 | 29 |

\* Radius of curvature $\rho$ is calculated according to the following equation:

$(1/\rho) = M/(E \cdot 1)$    M: bending moment

E: elastic modulus

I: sectional two-dimensional moment

Example 3

A polystyrene foam panel (made by DOW KAKOH K.K; Tradename STYROFOAM IB)was passed through the rolls. The diameter, roll pressure and rotation speed of rolls were the same as in Example 1, except that roll space, roll temperature and the number of passage were varied as shown in Table 3. The properties of the foam panels obtained are as shown in Table 3.

Comparative Example 2

The properties of the feedstock polystyrene foam panels used in Example 3 were tested and the results obtained are also shown in Table 3.

## Table 3

| Example | Run No. | Conditions | | | Compressive properties | | Bending properties | | | Notes |
|---|---|---|---|---|---|---|---|---|---|---|
| | | Roll temp. (°C) | Roll space (mm) | Thickness (mm) | 5% Compressive strength (kg/cm$^2$) | Compressive elastic modulus (kg/cm$^2$) | Bending strength (kg/cm$^2$) | Bending modulus (kg/cm$^2$) | Radius of curvature * (cm) | |
| 3 | 17 | 100 | 42.5 | 44.1 | 1.8 | 41 | 4.9 | 77 | 34 | - |
| | 18 | 100 | 42.5 | 43.6 | 1.7 | 39 | 5.0 | 78 | 33 | Passed through rolls twice. |
| | 19 | 100 | 42.5 )** 39.6 ) 32.0 ) | 36.2 | 0.9 | 20 | 5.9 | 80 | 24 | Passed through rolls twice. |
| | 20 | 15 | 42.5 | 43.8 | 2.0 | 47 | 4.6 | 80 | 38 | - |
| | 21 | 15 | 32.0 | 35.1 | 1.0 | 21 | 8.0 | 89 | 26 | Passed through rolls twice. |

* Radius of curvature $\rho$ is calculated according to the following equation:

$(1/\rho) = M/(E \cdot I)$  
 M: bending moment  
 E: elastic modulus  
 I: sectional two-dimensional moment

** Rolls in three steps are used.

## Example 4

The foam panel obtained by the same manner as in Example 2 having a total thickness of 20.0 mm and each flexible layer thickness of 2.5 mm was cut to a length of 83.5 mm and then subjected to Izod impact test JIS K 7110. The Izod impact value was 1.0 kgfcm/cm² ((kilogram force centimeter)/(centimeter squared)).

## Comparative Example 3

The same polystyrene foam panel as in Example 2 having a thickness of 20.4 mm was tested by the same manner as in Example 4 without passing through the rolls. Izod impact value was 0.7 kgfcm/cm².

## Example 5

Foam panels with each flexible layer thickness of constant 5 mm, with the total thickness being varied, were prepared by the same manner as in Example 2 except for the roll space being adjusted corresponding to the total thickness. After being processed, each foam panel was then tested as follows. Each panel was placed on a pair of supports, with a span distance between the supports of 20 cm. The panel was then bent gradually by a force applied downwardly and midway between the supports. The value of the minimum radius urethane was determined conventionally mathematically at the breakage point of the panel.

## Comparative Example 4

The same feedstock polystyrene foam panel as in Example 2 with the thickness being changed was tested by the same manner as in Example 5. The results are shown as line 4 in Figure 8.

According to the invention, foam panels with superior irregularity absorbability and applicability on curved surface are obtained, and the mounting operation on wall surface, etc. becomes easy. Furthermore, durability against shock and concentrated load are improved, so that the uses are enlarged to include a core material for a tatami mat, etc.

## CLAIMS

1. An extruded plastic foam panel having a closed cell structure characterized in that the panel has at least one flexible layer having wrinkles in its cell walls, which walls extend in a thickness direction formed on a surface of a rigid layer, and the rigid layer has substantially no wrinkles in its cell walls, with the cell walls of the flexible layer and the rigid layer being continuous.

2. An extruded plastic foam panel, as claimed in Claim 1, wherein the plastic is polystyrene.

3. An extruded plastic foam panel, as claimed in Claim 1 or Claim 2, wherein the flexible layer has a compression elasticity between 10 and 50 kilograms per square centimeter, and the rigid layer has a compression elasticity between 50 to 150 kilograms per square centimeter.

4. An extruded plastic foam panel, as claimed in any one of the preceding claims, wherein the thickness of the panel is between 15 to 100 millimeters, and wherein the thickness of the flexible layer, $t_1$, is in the range from 5 to 50 percent of said panel thickness.

5. An extruded plastic foam panel, as claimed in any one of the preceding claims, wherein a second flexible layer is formed on a second surface of the rigid layer, wherein the second flexible layer has a thickness $t_2$,

with the combined thickness of the two flexible layers being in the range from 5 to 65 percent of the total thickness of the extruded plastic foam panel.

6. An extruded plastic foam panel as claimed in any one of the preceding claims, wherein the flexible layer(s) have a cell diameter of 0.1 to 1.5 mm in the direction of thickness and an average density of 30 to 80 kg/m$^3$ and the rigid layer has a cell diameter of 0.2 to 2.0 mm and an average density of 25 to 40 kg/m$^3$.

7. A method of making a two-layered extruded plastic foam panel with one flexible layer and one rigid layer characterized by the steps of superimposing two extruded plastic foam panels possessing a closed cell structure and passing the superimposed panels at least once through rolls arranged with a distance less than the total thickness of the superimposed panels.

8. A method of making a three-layered extruded plastic foam panel having two flexible surface layers and a rigid core layer comprising the step of passing a single extruded plastic foam panel possessing a closed cell structure through rolls arranged with a distance less than the thickness of the single extruded plastic foam panel.

9. A method of making a layered extruded plastic foam panel, as claimed in Claim 7 or Claim 8, wherein the

- 22 -

passing of each panel through the rolls occurs during an aging step in an extrusion foaming procedure.

10. A method of making a layered extruded plastic foam panel, as claimed in any one of Claims 7 to 9, wherein the passing of the panels through the rolls occurs at least three times.

11. A method of making a layered extruded plastic foam panel, as claimed in any one of Claims 7 to 10, wherein the plastic is polystyrene and the rolls are heated between 50 to 120 degrees Centrigrade.

12. A method of making a layered extruded plastic foam panel, as claimed in any one of Claims 7 to 11, wherein the diameter of the rolls is between 50 and 300 millimeters.

13. A method of making a layered extruded plastic foam panel, as claimed in any one of Claims 7 to 12, wherein the rolls have a surface speed of between 2 and 5 meters per minute.

34,306                    - 22 -

0212884

# FIG.1

# FIG.2

# FIG.3

# FIG.4

FIG.5

0212884

FIG.6

FIG.7

0212884

# FIG.8

MINIMUM RADIUS OF CURVATURE (cm) vs TOTAL THICKNESS (mm)

COMPARATIVE EXAMPLE 4

EXAMPLE 5